# FASCICULE DE BREVET EUROPEEN

(11) **EP 1 013 677 B1**
(45) Date de publication et mention de la délivrance du brevet: **21.07.2004**
(21) Numéro de dépôt: 99204344.8
(22) Date de dépôt: 16.12.1999
(51) Int. Cl.: C08F 10/00, C08F 4/622, B01J 19/18, B01J 19/00, B01J 31/22, B01J 31/14, B01J 31/06

(54) **Procédé pour la préparation d'une composition catalytique pour la polymérisation des alpha-oléfines, composition catalytique obtenue et procédé de polymérisation utilisant une telle composition catalytique**
Verfahren zur Herstellung einer Katalysatorzusammensetzung für die Polymerisation von Olefinen, hergestellte Katalysatorzusammensetzung und Polymerisationsverfahren mit der selben Zusammensetzung
Process for the preparation of a catalytic composition for the polymerisation of alpha-olefins , catalytic composition obtained and polymerisation process using such a composition

(30) Priorité: 22.12.1998 BE 9800921
(43) Date de publication de la demande: 28.06.2000
(73) Titulaire: SOLVAY POLYOLEFINS EUROPE - BELGIUM (Société Anonyme), 1050 Bruxelles (BE)
(72) Inventeur: François, Philippe, 1490 Court-Saint-Etienne (BE); Bettonville, Serge, 4367 Crisnee (BE); Marchand, Dominique, 4671 Saive (BE)
(74) Mandataire: Smith, Julian Philip Howard

(56) Documents cités:
- EP-A- 0 274 109
- EP-A- 0 314 797
- EP-A- 0 598 543
- EP-A- 0 773 237
- EP-A- 0 865 821
- US-A- 5 556 893

## Description

La présente invention concerne un procédé pour la préparation d'une composition catalytique pour la polymérisation des alpha-oléfines et la composition catalytique ainsi obtenue. Elle concerne également un procédé de polymérisation des alpha-oléfines au moyen d'une telle composition catalytique et plus particulièrement un procédé pour la polymérisation du propylène et de l'éthylène.

Il est connu de polymériser, avec de hauts rendements, les alpha-oléfines au moyen de catalyseur contenant un composé de métal de transition contenant au moins un radical cyclopentadiényle pouvant être substitué et un activateur choisi parmi les aluminoxanes et les agents ionisants. Toutefois, de tels catalyseurs conduisent à la production de polymères de médiocre morphologie et il s'avère indispensable de les supporter sur des particules poreuses. Les supports les plus utilisés sont les supports inorganiques tels que plus particulièrement les silices. Toutefois, ces composés, s'ils permettent le support efficace des constituants du catalyseur, présentent le désavantage de conduire à la formation de polymères contenant des quantités non négligeables de composés inorganiques, appelés généralement cendres, qui diminuent les performances des polymères et plus particulièrement leur processabilité et l'aspect de surface des produits obtenus. En outre, on constate une diminution parfois très importante de la productivité des espèces actives.

L'utilisation de support polymère et plus particulièrement de supports de polyoléfines permet de résoudre partiellement ces problèmes. En effet, un tel support étant compatible avec le polymère final, il conduit, in fine, à des polymères dont la teneur en cendres est particulièrement faible (US-A-5 556 893 - SOLVAY). Toutefois, ces supports étant particulièrement inertes vis-à-vis des espèces actives, ils ne permettent qu'un accrochage partiel de ces dernières. De ce fait, le rendement de la réaction de préparation est diminué, ce qui conduit à des procédés économiquement moins rentables. En outre, on peut observer, en cours de polymérisation, des espèces actives libres qui conduisent à la formation de fines particules de polymères qui perturbent la polymérisation et rendent le polymère final plus difficilement manipulable.

Ces divers phénomènes expliquent un rendement plus faible de la réaction de préparation des catalyseurs qui est économiquement pénalisant. On a tenté de remédier à ce problème en utilisant des supports de porosité particulière et en soumettant le catalyseur ainsi obtenu à une prépolymérisation en phase gazeuse (EP 598543). Toutefois, le rendement de la réaction de préparation du catalyseur reste insuffisant et il est difficile d'éviter la formation d'agglomérats et de blocs lors de la prépolymérisation en phase gazeuse. Par ailleurs, la réaction de prépolymérisation qui implique la formation de relativement faibles quantités de prépolymère sur un support particulaire est difficile à mettre en oeuvre en phase gazeuse.

On a maintenant trouvé un procédé de préparation de solide catalytique ne présentant pas de tels désavantages.

A cet effet, la présente invention concerne un procédé pour la préparation d'une composition catalytique pour la polymérisation des alpha-oléfines dans lequel un catalyseur comprenant un composé d'un métal de transition (i) des groupes 4 à 6 du Tableau Périodique contenant au moins un ligand cyclopentadiénique pouvant être substitué et un activateur (ii) choisi parmi les aluminoxanes et les agents ionisants supportés sur un support (iii) constitué de particules poreuses de polyoléfine(s présentant un volume poreux généré par des pores de rayon de 100 à 7500 nm d'ou moins 0,2 cm³/g est soumis à une polymérisation préliminaire au cours de laquelle il est mis en contact avec une alpha-oléfine, dans des conditions polymérisantes, dans un diluant dont la viscosité cinématique, mesurée à 20 °C, est de 3 à 3000 cSt (centistokes) (de 3 à 3000 mm²/s) de manière à former de 0,01 à 50 g de polyoléfine par g de catalyseur contenant les composés (i), (ii) et (iii). La polymérisation préliminaire est donc réalisée en suspension dans ledit diluant. De préférence, le diluant mis en oeuvre lors de l'étape de polymérisation préliminaire a une viscosité cinématique d'au moins 5 et plus particulièrement d'au moins 10 cSt (mm²/s). Des diluants dont la viscosité cinématique est d'au plus 1000 et plus particulièrement d'au plus 500 cSt (mm²/s) conviennent bien. Le diluant est en outre le plus souvent choisi parmi les huiles minérales. Par huiles minérales, on entend désigner les produits possédant la viscosité cinématique décrite ci-avant et qui sont d'origine minérale. Ces huiles peuvent être par exemple des huiles légères, moyennes ou lourdes provenant de la distillation des goudrons de houille ou encore des huiles obtenues au cours de la distillation fractionnée du pétrole. Ces dernières sont particulièrement préférées et, parmi elles, les huiles qui sont des mélanges d'hydrocarbures distillant de 225 à 400 °C environ. Des exemples typiques de ces huiles sont les huiles ONDINA ® 15 à 68 commercialisées par SHELL ou leurs équivalents. On obtient de particulièrement bons résultats lorsque le diluant ne solubilise pas les composés (i). Par diluant ne solubilisant pas le composé (i), on entend des diluants dans lesquels, en fin de polymérisation préliminaire, la concentration maximale du composé (i), dans les conditions normales de pression et de température, n'excède pas 100 ppm, de préférence pas 5 ppm.

Selon la présente invention, on entend par alpha-oléfines, les oléfines à insaturation terminale contenant de 2 à 20, de préférence de 2 à 8 atomes de carbone telles que plus particulièrement l'éthylène, le propylène, le 1-butène, le 1-pentène, le 1-hexène, le 1-octène.

Les catalyseurs selon la présente invention sont obtenus en supportant le composé de métal de transition (i) et l'activateur (ii) sur le support (iii). Il va de soi que des constituants différents des composés (i) et (ii) peuvent être supportés sur le support (iii). De même, plusieurs composés (i) et/ou (ii) peuvent être supportés sur un même support. Le composé de métal de transition (i) utilisable selon la présente invention est le plus souvent choisi parmi les composés de formules

Qₐ(C₅H_{5-a-b}R¹ _{b})(C₅H_{5-a-c}R² _{c}) Me X Y (1)

Sₐ (C₅H_{5-a-d}R³ _{d}) Z Me X Y (2)

dans lesquelles
- Q représente un groupe de liaison qui assure la réticulation des deux ligands cyclopentadiéniques,
- S représente un groupe de liaison qui assure la réticulation du ligand cyclopentadiénique et du groupe Z,
- a vaut 0 ou 1,
- b, c et d sont des nombres entiers satisfaisant aux conditions 0≤b≤5, 0≤c≤5 et 0≤d≤5 quand a vaut 0 et 0≤b≤4, 0≤c≤4 et 0≤d≤4 quand a vaut 1,
- R¹, R² et R³ sont chacun des radicaux hydrocarbonés contenant de 1 à 20 atomes de carbone pouvant être reliés au ligand cyclopentadiénique sous la forme d'un radical monovalent ou pouvant être reliés l'un à l'autre de manière à former un cycle adjacent au cycle cyclopentadiénique, des atomes d'halogène, des groupes alcoxy ayant de 1 à 12 atomes de carbone, des groupes hydrocarbonés contenant du silicium de formule -Si(R')(R'')(R'''), des groupes hydrocarbonés phosphorés de formule - P(R')(R''), des groupes hydrocarbonés azotés de formule -N(R')(R'') ou des groupes hydrocarbonés contenant du bore de formule -B(R')(R'') dans lesquelles R', R'' et R''' représentent des groupes hydrocarbonés contenant de 1 à 24 atomes de carbone pour autant que quand b, c ou d vaut 2 ou plus et/ou qu'il existe une pluralité de radicaux R¹, R² ou R³, ces derniers peuvent être identiques ou différents,
- Me est un métal de transition des groupes 4 à 6 du Tableau Périodique,
- Z est un oxygène, un soufre, un groupe alcoxy ou thioalcoxy ayant de 1 à 20 atomes de carbone, un groupe hydrocarboné azoté ou phosphoré ayant de 1 à 40 atomes de carbone ou un groupe hydrocarboné contenant de 1 à 20 atomes de carbone, pour autant qu'une liaison du groupe Z soit liée au groupe S quand a vaut 1, et
- X et Y, identiques ou différents, sont chacun un hydrogène, un halogène, un groupe hydrocarboné, un groupe alcoxy, un groupe amino, un groupe hydrocarboné phosphoré ou un groupe hydrocarboné contenant du silicium ayant de 1 à 20 atomes de carbone.

Les composés (i) de formule (1) préférés sont généralement tels que
- Q est un radical alkylène contenant 1 ou 2 atomes de carbone pouvant être substitués par des groupements alkyle ou aryle contenant de 1 à 10 atomes de carbone, un dialkylgermanium ou un dialkylsilicium contenant de 1 à 6 atomes de carbone,
- a vaut 0 ou 1,
- b et c sont des nombres entiers satisfaisant aux conditions 0 ≤ b ≤ 5 et 0 ≤ c ≤ 5 quand a vaut 0 et 0 ≤ b ≤ 4 et 0 ≤ c ≤ 4 quand a vaut 1,
- R¹ et R² sont des radicaux alkyle, alkényle, aryle, alkylaryle, alkénylaryle ou arylalkyle contenant de 1 à 20 atomes de carbone, plusieurs radicaux R¹ et/ou plusieurs radicaux R² pouvant être reliés l'un à l'autre de manière à former un cycle contenant-de 4 à 8 atomes de carbone,
- Me est le zirconium, l'hafnium ou le titane,
- X et Y sont des halogènes ou des groupes hydrocarbonés choisis parmi les alkyles, les aryles et les alkényles contenant de 1 à 10 atomes de carbone.

A titre d'exemples particulièrement préférés de ces composés, on peut citer les composés de formule (1) dans laquelle Q est choisi parmi les diméthyl et diphényl silyl et les méthylène et éthylène substitués par des groupes alkyle ou aryle contenant de 1 à 8 atomes de carbone. Des composés de formule (1) qui conviennent particulièrement bien sont les composés dans lesquels les radicaux (C₅H_{5-a-b}R¹_{b}) et (C₅H_{5-a-c}R²_{c}) sont choisis parmi les groupements cyclopentadiényle, indényle et fluorényle pouvant être substitués. ,

Les composés (i) de formule (2) préférés sont le plus souvent tels que
- a vaut 1,
- S est un radical alkylène contenant 1 ou 2 atomes de carbone pouvant être substitués par des groupements alkyle ou aryle contenant de 1 à 10 atomes de carbone, un dialkylgermanium ou un dialkylsilicium contenant de 1 à 6 atomes de carbone,
- R³ est un radical alkyle, alkényle, aryle, alkylaryle, alkénylaryle ou arylalkyle contenant de 1 à 20 atomes de carbone, deux radicaux R³ pouvant être reliés l'un à l'autre de manière à former un cycle contenant de 4 à 8 atomes de carbone,
- d est un nombre entier tel que 0 ≤ d ≤ 4,
- Me est le zirconium, l'hafnium ou le titane,
- X et Y sont des halogènes ou des groupes hydrocarbonés choisis parmi les alkyles, les aryles et les alkényles.

Des composés (i) de formule (2) donnant de bons résultats sont les composés dans lesquels le substituant (C₅H_{5-a-d}R³_{d}) est un substituant cyclopentadiényle, indényle ou fluorényle pouvant être substitué et Z est un groupement amino.

L'activateur (ii) est choisi parmi les aluminoxanes et les agents ionisants. Par aluminoxanes on entend les composés répondant aux formules R₂AlO-(Al R-O)ₙ -AlR₂ et (-AlR-O-)ₙ₊₂ dans lesquelles n est un nombre de 1 à 40 et R est un groupe alkyle ou aryle contenant de 1 à 12 atomes de carbone. Les composés préférés de ce type sont les méthyl-, éthyl- ou isobutylaluminoxanes.

Par agents ionisants, on entend désigner les composés comprenant une première partie qui présente les propriétés d'un acide de Lewis et qui est capable d'ioniser le composé cyclopentadiénique et une deuxième partie, qui est inerte vis-à-vis du composé cyclopentadiénique ionisé et qui est capable de le stabiliser. A titre d'exemple de tels composés, on peut citer le tétrakis(pentafluorophényl) borate de triphénylcarbénium, le tétrakis(pentafluorophényl)borate de N,N-diméthylanilinium, le tétrakis(pentafluorophényl)borate de tri-(n-butyl)ammonium, le tri(pentafluorophényl)bore, le triphénylbore, le triméthylbore le tri(triméthylsilyl)borate et les organoboroxines.

Les activateurs préférés selon la présente invention sont les aluminoxanes.

Le support (iii) utilisable selon la présente invention est constitué de particules poreuses de polyoléfine(s). Par polyoléfines, on entend les polymères dérivés des alpha-oléfines définies ci-avant ou les copolymères de ces alpha-oléfines entre elles ou avec des dioléfines comprenant de 4 à 18 atomes de carbone. Des polymères dérivés uniquement d'alpha-oléfines conviennent bien. Les supports préférés selon la présente invention sont des homo ou copolymères de l'éthylène et du propylène. Les particules de polyoléfines utilisables comme support ont le plus souvent un diamètre moyen 5 à 500 µm. De préférence le diamètre moyen est supérieur ou égal à 8 µm et plus particulièrement supérieur ou égal à 15 µm. Les particules dont le diamètre moyen est inférieur ou égal à 200 µm et plus particulièrement inférieur ou égal à 150 µm donnent de bons résultats.

Le volume poreux des particules de support est également une caractéristique essentielle. Les particules de polyoléfines utilisées comme support présentent un volume poreux généré par les pores de rayon de 1000 à 75000 Å (10⁻¹⁰ m) d'au moins 0,2 cm³/g. Des volumes poreux d'au moins 0,3 cm³/g et de préférence d'au moins 0,5 cm³/g donnent de bons résultats.

Les supports (iii) utilisés préférentiellement selon la présente invention sont décrits dans le brevet US-A-5 556 893. Ces supports préférés sont obtenus par polymérisation d'une ou plusieurs alpha-oléfines au moyen d'un solide à base de trichlorure de titane particulier préparé selon un procédé comprenant la mise en contact de tétrachlorure de titane (TiCl₄), prétraité par un composé électrodonneur, avec une composition organoaluminique correspondant à la formule générale

Al R⁶ ₚ(Y')_{q}X'_{3-(p+q)}

dans laquelle
- R⁶ représente un radical hydrocarboné de préférence choisi parmi les radicaux alkyles linéaires ou branchés contenant de 2 à 8 atomes de carbone,
- Y' représente un groupement choisi parmi -OR⁴, -SR⁴ et -NR⁴R⁵ dans lequel R⁴ et R⁵ représentent chacun un radical hydrocarboné contenant de 1 à 35 atomes de carbone ou un atome d'hydrogène;
- X' représente un halogène;
- p est un nombre quelconque tel que 0 < p ≤ 2,5;
- q est un nombre quelconque tel que 0,5 < q < 3, la somme (p+q) étant telle que 0,5 < (p+q) ≤ 3
de manière à obtenir un matériau liquide qui est ensuite soumis à un traitement thermique réalisé en présence d'un agent halogéné.

La réaction de polymérisation est généralement réalisée dans des conditions telles qu'il se forme de 5 à 3000 g, de préférence de 15 à 500 g polymère par g de composé catalytique à base de trichlorure de titane.

De tels supports présentent l'avantage d'avoir la morphologie souhaitée sans devoir subir de traitement(s) ultérieur(s). Particulièrement économiques, ils possèdent simultanément une porosité et une résistance mécanique à l'abrasion très élevées qui permet leur utilisation dans les réacteurs munis des agitateurs définis ci-après. Soumis aux mêmes conditions, les supports de l'art antérieur et plus particulièrement les supports de silice ne conservent pas leur morphologie.

Les quantités respectives des composés (i), (ii) et (iii) dans le catalyseur ne sont pas critiques. Le plus souvent, le catalyseur contient de 0,0001 à 0,5 g de composé (i) par gramme de support (iii). De préférence la concentration en composé (i) est d'au moins 0,0005 et plus particulièrement d'au moins 0,001 g par gramme de support (iii). Des quantités de composé (i) inférieures ou égales à 0,3 et préférentiellement inférieures ou égales à 0,1 g par gramme de support donnent de bons résultats.

La quantité de composé d'activateur (ii) dépend du type d'activateur utilisé. Lorsque l'activateur (ii) est un aluminoxane, la quantité d'activateur (ii) est le plus souvent telle que le rapport atomique entre l'aluminium de l'aluminoxane et le métal du composé (i) est de 20 à 5000. De préférence ce rapport est d'au moins 50, plus particulièrement d'au moins 100. On obtient de bons résultats lorsque ce rapport est d'au moins 200. Le plus souvent, l'activateur (ii) est mis en oeuvre dans des quantités telles que le rapport atomique aluminium / métal est d'au plus 2000 et plus particulièrement d'au plus 1500. Des rapports d'au plus 1000 donnent de bons résultats. Lorsque l'activateur (ii) est un agent ionisant, le composé de métal de transition (i) est le plus souvent présent dans des quantités telles que le rapport molaire entre l'activateur (ii) et le composé (i) est de 0,05 à 50. De préférence ce rapport est d'au moins 0,1 et plus particulièrement d'au plus 20. Des rapports d'au plus 10 donnent de particulièrement bons résultats.

L'alpha-oléfine mise en oeuvre au cours de l'étape de polymérisation préliminaire est avantageusement choisie parmi les alpha-oléfines contenant de 2 à 4 atomes de carbone. L'éthylène et le propylène conviennent particulièrement bien. La quantité de polymère formée lors de l'étape de polymérisation préliminaire est le plus souvent d'au moins 0,05 et plus particulièrement d'au moins 0,1 g de polyoléfine par g de catalyseur contenant les composés (i), (ii) et (iii). On obtient de bons résultats lorsque cette quantité est inférieure ou égale à 30 g, de préférence d'au plus 10 g par g de catalyseur contenant les composés (i), (ii) et (iii).

Dans cette étape de polymérisation préliminaire, la polymérisation est effectuée en suspension dans le diluant mentionné ci-avant, le monomère étant le plus souvent mis en oeuvre à une pression partielle d'environ 0,1 à environ 10 kg/cm². Cette pression partielle est ensuite maintenue constante par introduction de monomère jusqu'à ce qu'on ait polymérisé la quantité souhaitée de monomère. De préférence la pression partielle de monomère est supérieure ou égale à environ 0,2 kg/cm² et plus particulièrement supérieure ou égale à environ 0,5 kg /cm². Le plus souvent cette pression partielle est inférieure ou égale à 5 kg/cm² et plus particulièrement inférieure ou égale à 3 kg/cm². La durée de la polymérisation préliminaire peut varier d'environ 1 minute à environ 15 heures, des durées d'environ 5 minutes à environ 5 heures étant plus couramment utilisées. La température de la polymérisation préliminaire est le plus souvent d'environ 0 à environ 100 °C, plus particulièrement d'environ 10 à environ 85 °C. Il peut également s'avérer avantageux d'introduire lors de la polymérisation préliminaire un agent connu de régulation de la masse moléculaire des polymères tel que par exemple l'hydrogène. Dans certain cas également, plus d'une alpha-oléfine sont mises en oeuvre. On préfère toutefois ne mettre en oeuvre qu'une alpha-oléfine à la polymérisation préliminaire.

Le catalyseur mis en oeuvre à l'étape de polymérisation préliminaire peut être préparé par n'importe quel procédé connu en soi. A titre d'exemple de tels procédés, on peut citer un procédé dans lequel les composés (i) et (ii) sont dissous dans un solvant qui est ensuite évaporé en présence du support (iii) ou dans lequel les composés (i) et (ii) sont dissous dans un solvant de manière à obtenir une solution proche de la saturation à laquelle on ajoute les particules de support (iii) en une quantité telle que la totalité de la solution puisse être supportée.

Selon un procédé particulièrement préféré, les particules de support sont mises en contact avec une solution contenant l'activateur (ii) pour obtenir une suspension qui est ensuite évaporée dans un réacteur muni d'un agitateur comprenant un élément de raclage qui épouse les parois du réacteur de telle manière que la distance entre les bords de cet élément les plus proches des parois du réacteur et lesdites parois soit de 2 à 200 fois le diamètre moyen des particules du support. De préférence cette distance est d'au moins 4 fois et plus particulièrement d'au moins 10 fois le diamètre moyen des particules de support. Une distance d'au plus 100 fois et de préférence d'au plus 50 fois le diamètre moyen des particules donne de bons résultats. Une distance d'au plus 30 fois le diamètre moyen des particules convient bien.

Dans ce procédé, il est préférable que, lorsque l'agitateur est en mouvement, les bords de l'élément de raclage les plus proches des parois du réacteur épousent plus de 50 %, de préférence plus de 60% et plus particulièrement plus de 70% de la surface du réacteur en contact avec la suspension. L'utilisation d'un tel agitateur lors de l'évaporation du solvant empêche le croûtage des particules sur les parois du réacteur. Un tel croûtage étant principalement observé lorsque l'activateur (ii) est un composé aluminoxane, l'utilisation de l'agitateur décrit ci-avant est particulièrement favorable lorsque l'activateur (ii) est choisi parmi ces composés. La géométrie de l'élément de raclage n'est pas critique pour autant qu'elle satisfasse les conditions décrites ci-avant. On préfère toutefois que l'élément de raclage ait la forme d'une ancre épousant les parois du réacteur. Il est également favorable que l'agitateur comprenne un ou plusieurs éléments assurant une homogénéisation efficace de la suspension en cours d'évaporation. De tels éléments sont favorablement constitués de plaques attachées à l'axe de l'agitateur. Dans certains cas, et plus particulièrement lorsque la quantité de suspension à évaporer est importante, ces plaques peuvent présenter un angle généralement compris entre 25 et 155 ° avec l'axe de l'agitateur.

Dans ce procédé, la vitesse de rotation de l'agitateur n'est pas critique. On préfère toutefois qu'elle soit supérieure ou égale à 5 de préférence supérieure ou égale à 10 tr/min. Des vitesses d'agitation inférieures ou égales à 400 et de préférence d'au plus 250 tr/min conviennent bien.

La solution contenant l'activateur (ii) est généralement préparée à partir d'hydrocarbures aliphatiques, cycloaliphatiques liquides pouvant être halogénés ou d'hydrocarbures aromatiques liquides. A titres d'exemples préférés de ces solvants, on peut citer le benzène, le toluène, le xylène, l'hexane, l'heptane, l'octane, la décaline, le dichlorométhane, le dichloroéthane, le chloropropane et le chlorobenzène. La concentration de l'activateur (ii) dans la solution n'est généralement pas critique. Le plus souvent, l'activateur (ii) est présent à une concentration de 0,1 à 60 % en poids par rapport au poids total de solvant. De préférence, la concentration minimale d'activateur est d'au moins 1 % et plus particulièrement d'au moins 3 % en poids par rapport au poids total de solvant. Cette concentration est en outre le plus souvent inférieure ou égale à 50 % en poids par rapport au poids de solvant. Des concentrations inférieures ou égales à 30 % en poids donnent de particulièrement bons résultats. La quantité de support mise en oeuvre à cette étape dépend de la quantité d'activateur (ii) que l'on veut déposer sur le support et de la porosité dudit support. Le plus souvent, la quantité de support est de 0,5 à 60 % en poids par rapport au poids de solvant. De préférence, cette quantité est d'au moins 2 % en poids et plus particulièrement d'au moins 5 % en poids par rapport au poids de solvant. Une quantité d'au plus 50 % en poids et plus particulièrement d'au plus 30 % en poids par rapport au poids de solvant convient bien.

L'évaporation du solvant peut se faire selon toutes les méthodes connues à cet effet telles que par exemple l'évaporation sous pression réduite, l'entraînement avec un gaz, l'évaporation sous l'action de la chaleur ou encore la combinaison de ces différents moyens. Les conditions de pression, de température et de durée dépendent du procédé utilisé. Le solvant est le plus souvent évaporé jusqu'à ce que sa concentration dans le catalyseur soit inférieure ou égale à 2 % en poids, de préférence inférieure ou égale à 1 % en poids, par rapport au poids de support.

Le composé (i) de métal de transition peut être introduit dans la suspension décrite ci-avant. Il peut également avoir été incorporé au support avant sa mise en oeuvre. Enfin, il peut être mis en contact avec les particules de support comprenant l'activateur (ii). Le procédé qui donne les meilleurs résultats comprend la préparation d'une solution contenant le composé de métal de transition (i) et l'activateur (ii) à laquelle on ajoute le support (iii) de manière à former une suspension qui est ensuite évaporée.

Le composé (i) est généralement mis en oeuvre en quantité telle que les quantités respectives des composés (i) et (ii) et (iii) décrites ci-avant soient satisfaites.

Le rendement de ce procédé de préparation de catalyseur est particulièrement élevé. On observe en effet que ce procédé permet d'obtenir une poudre sèche de bonne coulabilité avec un rendement d'au moins 90 % et plus particulièrement d'au moins 95 % des composés mis en oeuvre. En outre, on remarque que plus de 90 %, le plus souvent plus de 95 %, plus particulièrement plus de 98 % du composé (i) mis en oeuvre sont incorporés dans le support (iii). On remarque également de manière étonnante que plus de 85 % en poids, généralement plus de 90 % en poids et plus particulièrement plus de 95 % en poids d'activateur (ii) mis en oeuvre sont incorporés dans le support (iii).

Les particules de catalyseur présentent la même morphologie que les supports qui lui ont donné naissance.

Un procédé de préparation particulier selon la présente invention comprend la mise en contact du support (iii) avec une solution contenant le composé de métal de transition (i) et l'activateur (ii) de manière à obtenir une suspension qui est ensuite évaporée dans un réacteur muni d'un agitateur comprenant un élément de raclage qui épouse les parois du réacteur de telle manière que la distance entre les bords de cet élément les plus proches des parois du réacteur et lesdites parois soit de 4 à 50 fois le diamètre moyen des particules du support, ledit agitateur comprenant également un élément assurant l'homogénéisation de la suspension, pour obtenir un solide pulvérulent qui est ensuite soumis à une polymérisation préliminaire au cours de laquelle il est mis en contact avec une alpha-oléfine contenant de 2 à 4 atomes de carbone dans une huile minérale ayant une viscosité cinématique de 20 à 300 cSt (mm²/s) pour former de 0,1 à 20 g de polyoléfine par g de catalyseur contenant les composés (i), (ii) et (iii).

Les compositions catalytiques ainsi obtenues, qui font également l'objet de la présente invention, sont avantageusement utilisées pour la polymérisation des alpha-oléfines telles quelles (c'est-à-dire sous la forme de la suspension ayant subi la polymérisation préliminaire) ou après élimination partielle ou totale du diluant. Elles peuvent également être mises en oeuvre après avoir été lavées par un diluant hydrocarboné inerte choisi préférentiellement parmi les hydrocarbures aliphatiques, cycloaliphatiques et aromatiques liquides tels que les alcanes, isoalcanes, cycloalcanes liquides, le benzène et le toluène.

Elles présentent l'avantage d'avoir une activité particulièrement élevée. En effet, on observe de manière étonnante que ces compositions catalytiques ont une activité très proche et même souvent égale à celle obtenue en ne supportant pas les composés (i) et (ii). Par ailleurs, l'utilisation de ces compositions catalytiques permet l'obtention de polymères ayant une très belle morphologie et dont le taux de fines particules (particules ayant un diamètre inférieur ou égal à 100 µm) est très faible, le plus souvent inférieur à 0,5 % en poids et plus particulièrement inférieur à 0,1 % en poids par rapport au poids total de polymère. On obtient un tel taux de fines même lorsque le rendement de la réaction de polymérisation conduit à un polymère contenant moins de 0,2 ppm de métal de transition.

La présente invention concerne enfin un procédé d'homo et/ou de copolymérisation des alpha-oléfines dans lequel on met en contact, dans des conditions polymérisantes, une ou plusieurs alpha-oléfines avec la composition catalytique décrit ci-avant. Le procédé de polymérisation selon l'invention peut être réalisé en continu ou en discontinu, selon n'importe quel procédé connu, en solution ou en suspension dans un diluant hydrocarboné, en suspension dans le, ou un des monomères maintenu à l'état liquide ou encore en phase gazeuse. La température de polymérisation est le plus souvent de - 20°C à + 150°C. La pression est de préférence choisie entre la pression atmosphérique et 100 10⁵ Pa, plus particulièrement entre 10 et 55 10⁵ Pa. La masse moléculaire des polymères fabriqués selon le procédé de l'invention peut être réglée par addition d'un ou plusieurs agents de réglage de la masse moléculaire des polyoléfines tels que plus particulièrement l'hydrogène.

Par ailleurs, il peut également s'avérer préférable d'introduire dans le milieu de polymérisation un ou plusieurs composés organoaluminiques permettant d'améliorer l'activité de la composition catalytique et/ou de capter les poisons de la réaction de polymérisation. Ces composés peuvent être des aluminoxanes tels que décrits ci-avant ou des composés organoaluminiques répondant à la formule Rₘ AlX'₃₋ₘ ou Rₘ AlOR⁷₃₋ₘ dans lesquelles R et X' sont des radicaux tels que définis ci-avant, R⁷ est un radical hydrocarboné contenant de 1 à 20 atomes de carbone et m est un nombre tel que 0≤m≤3. Des composés organoaluminiques préférés sont les trialkylaluminiums, les halogénures d'alkylaluminium et les aluminoxanes.

Un procédé de polymérisation particulièrement intéressant concerne l'homo et la copolymérisation de l'éthylène et du propylène.

Lorsque la polymérisation du propylène est effectuée en suspension dans le monomère liquide ou en phase gazeuse, il s'avère avantageux d'effectuer une première étape de polymérisation, distincte de la polymérisation préliminaire et appelée ci-après étape de prépolymérisation, dans le monomère liquide à une température de 0 à 60°C, au cours de laquelle on forme de 10 à 1000 g de polymère par g de solide catalytique contenant les composés (i), (ii) et (iii).

Une telle étape de prépolymérisation est également avantageuse lorsqu'on polymérise de l'éthylène dans un diluant hydrocarboné choisi parmi les hydrocarbures aliphatiques contenant de 3 à 10 atomes de carbone ou en phase gazeuse. Dans ce cas, la prépolymérisation est effectuée dans un diluant choisi parmi les hydrocarbures aliphatiques contenant de 3 à 10 atomes de carbone, à une température de 0 à 60 °C et la quantité de prépolymère est de 10 à 1000 g de polymère par g de solide catalytique contenant les composés (i), (ii) et (iii).

Le plus souvent, la quantité de prépolymère formée à ces étapes est d'au moins 20 plus particulièrement d'au moins 50 g par g de solide catalytique contenant les composés (i), (ii) et (iii). On obtient de bons résultats lorsque la quantité de prépolymère est d'au plus 700 plus particulièrement d'au plus 400 g par g de solide catalytique contenant les composés (i), (ii) et (iii). De préférence ces étapes sont réalisées à une température de 20 à 50°C.

Un avantage des procédés comprenant une telle étape est que la morphologie du polymère est conservée même lorsque la polymérisation est effectuée à haute température.

Les exemples suivants servent à illustrer l'invention. La signification des symboles utilisés dans ces exemples, les unités exprimant les grandeurs mentionnées et les méthodes de mesure de ces grandeurs sont explicitées ci-dessous.

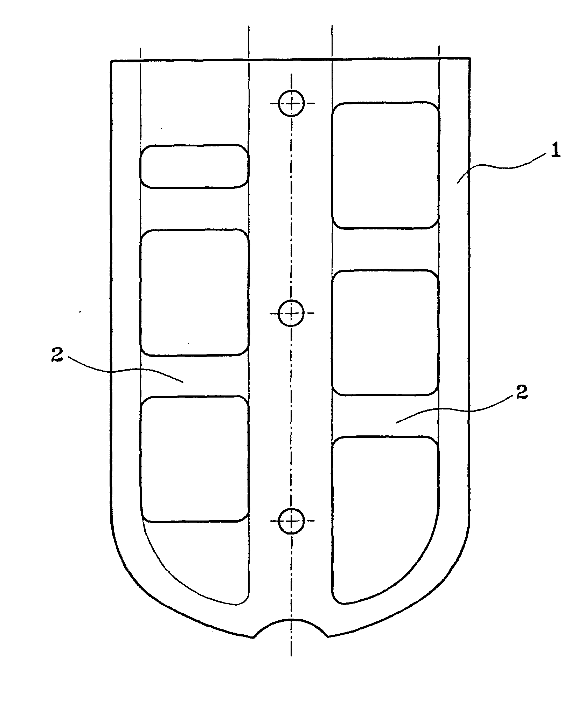

La figure 1 montre un exemple d'agitateur utilisable dans le procédé selon l'invention. Cet agitateur comprend un élément de raclage - 1 - en forme d'ancre. La distance entre les bords de cet agitateur les plus proches des parois du réacteur et lesdites parois est de 1 mm.

Lors de la rotation de l'agitateur, les bords de cet élément épousent plus de 95 % de la surface du réacteur en contact avec la suspension. L'agitateur est également muni de pales - 2 - assurant l'homogénéisation de la suspension. Ces pales sont disposées verticalement et sont reliées à l'élément de raclage.

La porosité des supports (iii) est déterminée par la méthode de pénétration de mercure au moyen de porosimètres commercialisés par CARLO ERBA CO. dans la zone des rayons de pores 75 à 75000 Å (10⁻¹⁰ m). On obtient ainsi la courbe du volume poreux exprimée en cm³/g en fonction du diamètre des pores à partir de laquelle on détermine le volume poreux généré par les pores de rayons de 1000 à 75000 Å (10⁻¹⁰ m).

Le diamètre moyen des particules de support est le diamètre médian des particules mesuré à partir d'une suspension dans le 2-propanol selon la norme NF X 11-666 (1984) sur un appareil MALVERN® modèle Mastersizer MS 1000.
- Ds =: diamètre moyen des particules de support en µm.
- VPs =: volume poreux interne du support généré par les pores de rayon de 1000 à 75000 Å (10⁻¹⁰ m) exprimé en cm³/g.
- α =: activité catalytique exprimée conventionnellement en kg de polymère insoluble dans le milieu de polymérisation, obtenus par millimole de métal contenu dans le composé (i). Cette activité est appréciée indirectement à partir de la détermination de la teneur résiduelle en métal dans le polymère par Inductively Coupled Plasma Mass Spectrometry (ICP-MS) sur un appareil MICROMASS® Plasma Trace 1.
- Prod =: quantité de polymère formée lors des essais de polymérisation exprimée en g de polymère par g de composé catalytique mis en oeuvre (catalyseur ou composition catalytique).
- PSA =: poids spécifique apparent de la fraction de polymère insoluble exprimé en g/dm³.
- FTri =: indice d'isotacticité du polymère du propylène, apprécié par la fraction molaire de triades isotactiques (enchaînement séquencé de trois unités monomériques de propylène en configuration méso) dans le polymère total. Cette valeur est déterminée par résonance magnétique nucléaire en ¹³C comme décrit dans Macromolecules, volume 6, n° 6, page 925 (1973).
- MFI =: indice de fluidité en fondu mesuré sous une charge de 2,16 kg à 230 °C et exprimé en g/10 min (norme ASTM D 1238 (1986)).
- MI =: indice de fluidité en fondu mesuré sous une charge de 2,16 kg à 190 °C et exprimé en g/10 min (norme ASTM D 1238 (1986)).
- HLMI =: indice de fluidité en fondu mesuré sous une charge de 21,6 kg à 190 °C et exprimé en g/10 min (norme ASTM D 1238 (1986)).
- HLMI/MI =: mesure de la distribution des poids moléculaires des polymères.

### Exemple 1 (de référence)

### A. Préparation du catalyseur

Dans un réacteur de 0,8 l, préalablement conditionné, muni d'un agitateur tel que décrit ci-avant en rapport avec la figure 1, on introduit successivement 1,12 g de diméthylsilyl-1,1-bis(2-méthyl-4,5-benzoindényle) ZrCl₂ [composé (i)] et 50 ml de toluène. Ensuite on ajoute, goutte à goutte et sous agitation, 500 ml d'une solution de méthylaluminoxane (composé (ii)) à 10 % en poids dans du toluène et 50 g d'un support de polypropylène (composé (iii)) préparé comme décrit à l'exemple 1 du brevet US-A-5556893 et caractérisé par un Ds de 100 et un VPs de 0,93. La distance entre les bords de l'agitateur les plus proches des parois du réacteur et lesdites parois est donc de 10 fois le diamètre moyen des particules de support.

La suspension ainsi obtenue est ensuite portée à 65 °C et évaporée sous agitation et sous un courant d'azote jusqu'à obtention d'une poudre sèche de bonne coulabilité. Cette étape d'évaporation dure environ 10 heures et est considérée comme complète lorsque la concentration en solvant dans l'azote à la sortie du réacteur est inférieure à 50 ppm. A température ambiante, on prélève 4,4 g de poudre à des fins d'analyse. La teneur en zirconium de cette poudre mesurée par fluorescence X est de 2,3 g/kg.

Le reste de la poudre est alors mis en suspension sous balayage d'azote dans 518,8 g d'huile minérale ONDINA® 32 commercialisée par SHELL et ayant viscosité cinématique de 90 cSt, de manière à former une suspension à 15 % en poids. On récupère ainsi 598 g de suspension ne contenant ni bloc ni agglomérat et correspondant à 98 % des composés mis en oeuvre. Les parois du réacteur ne présentent pas de traces de croûtage.

### B. Polymérisation du propylène

Dans un autoclave de 5 litres, préalablement séché, on introduit sous balayage d'azote sec 2 mmoles de triéthylaluminium et 3 litres de propylène liquide.

Après avoir introduit 1 ml de suspension de catalyseur, on maintient le réacteur à 30°C durant 20 minutes (prépolymérisation), puis on introduit une pression partielle d'hydrogène d'environ 0,15 bar avant d'augmenter la température du réacteur à 60°C. Après 1 heure, l'excédent de propylène est dégazé et on récupère, avec une Prod de 1770, du polypropylène sous forme de grains de morphologie régulière dont le PSA est 362 et ne contenant ni particules ayant un diamètre inférieur ou égal à 1000 µm ni particules ayant un diamètre inférieur ou égal à 100µm. Les parois du réacteur ne présentent pas de traces croûtages.

### Exemple 2 (selon l'invention)

### A. Préparation de la composition catalytique

Dans le réacteur décrit à l'exemple 1, on introduit 226 g de la suspension obtenue à l'exemple 1. Le récipient étant maintenu à 25°C, sous atmosphère inerte, on y introduit alors du propylène sous une pression partielle de 1,5 kg/cm². Cette introduction est maintenue pendant environ 35 minutes de manière à incorporer 13,5 ml propylène (polymérisation préliminaire - 0,2 g de polypropylène par gramme de catalyseur contenant les composés (i), (ii) et (iii)).

### B. Polymérisation du propylène

Soumis à un test de polymérisation identique à celui de l'exemple 1, cette composition catalytique permet la formation, avec une Prod de 2080, du polypropylène se présentant sous forme de grains de morphologie régulière (PSA 388, pas de particule de diamètre ≤ 1000µm). Les parois du réacteur ne présentent pas de traces croûtages. On observe donc que la polymérisation préliminaire du catalyseur permet d'améliorer à la fois la morphologie du polymère et la productivité de la réaction de polymérisation.

### Exemple 3 (selon l'invention)

### A. Préparation de la composition catalytique

Dans le réacteur tel que décrit à l'exemple 1, on introduit successivement 0,438 g de diméthylsilyl-1,1-bis(2-méthyl-4,5-benzoindényle) ZrCl₂ [composé (i)] et 50 ml de toluène. Ensuite, on ajoute, goutte à goutte et sous agitation, 150 ml d'une solution de méthylaluminoxane à 10 % en poids dans du toluène et 40 g du support de l'exemple 1.

La suspension ainsi obtenue est ensuite portée à 65 °C et évaporée sous agitation et sous un courant d'azote jusqu'à obtention d'une poudre sèche de bonne coulabilité. Cette étape d'évaporation dure environ 5 heures et est considérée comme complète lorsque la concentration en solvant dans l'azote à la sortie du réacteur est inférieure à 50 ppm. La poudre est alors mise en suspension sous balayage d'azote dans 577 g l'huile minérale ONDINA 32 de manière à former une suspension à 8 % en poids. Le récipient étant maintenu à 25 °C, sous atmosphère inerte, on introduit alors du propylène sous une pression partielle de 1,5 kg/cm². Cette introduction est maintenue pendant environ 60 minutes de manière à incorporer 25 ml propylène (polymérisation préliminaire - 0,2 g de polypropylène par gramme de catalyseur contenant les composés (i), (ii) et (iii)).

### B. Polymérisation du propylène

La composition catalytique obtenue au point A est soumise à un test de polymérisation identique à celui de l'exemple 1 sauf que la quantité de suspension de composition catalytique est de 1,5 ml et que la température du réacteur est de 70°C. Le polypropylène formé se présente sous forme de grains de morphologie régulière (PSA 356, pas de particules ayant un diamètre ≤ à 1000µm). La Prod est de 3790 et l'activité, très élevée (α = 456), est similaire à ce qui est décrit dans la littérature pour une polymérisation "homogène" dans des conditions similaires. Les parois du réacteur ne présentent pas de traces croûtages.

## Revendications

1. Procédé d'homo et/ou de copolymérisation des alpha-oléfines dans lequel on met en contact, dans des conditions polymérisantes, une ou plusieurs alpha-oléfines avec une composition catalytique qui a été préparée en soumettant des particules de catalyseur comprenant un composé d'un métal de transition (i) des groupes 4 à 6 du Tableau Périodique contenant au moins un ligand cyclopentadiénique pouvant être substitué et un activateur (ii) choisi parmi les aluminoxanes et les agents ionisants supportés sur un support (iii) constitué de particules poreuses de polyoléfine(s) présentant un volume poreux, généré par les pores de rayon de 100 à 7500 nm d'au moins 0,2 cm³/g, à une polymérisation préliminaire au cours de laquelle elles ont été mises en contact avec une alpha-oléfine, dans des conditions polymérisantes, dans un diluant dont la viscosité cinématique, mesurée à 20 °C, est de 3 à 3000 cSt (centistokes) (de 3 à 3000 mm2/s) de manière à former de 0,01 à 50 g de polyoléfine par g de catalyseur contenant les composés (i), (ii) et (iii).

2. Procédé selon la revendication 1, appliqué à la polymérisation de l'éthylène dans un diluant hydrocarboné choisi parmi les hydrocarbures aliphatiques contenant de 3 à 10 atomes de carbone ou en phase gazeuse comprenant une étape de prépolymérisation dans un diluant hydrocarboné tel que défini ci-avant à une température de 0 à 60 °C de manière à former de 10 à 1000 g de polymère par gramme de solide catalytique contenant les composés (i), (ii) et (iii).

3. Procédé selon la revendication 1, appliqué à la polymérisation du propylène en suspension dans le monomère liquide ou en phase gazeuse comprenant une étape de prépolymérisation dans le monomère liquide à une température de 0 à 60 °C au cours de laquelle on forme de 10 à 1000 g de polymère par g de solide catalytique contenant les composés (i), (ii) et (iii).

4. Procédé pour la préparation d'une composition catalytique pour la polymérisation des oléfines dans lequel des particules de catalyseur, comprenant un composé d'un métal de transition (i) des groupes 4 à 6 du Tableau Périodique contenant au moins un ligand cyclopentadiénique pouvant être substitué et un activateur (ii) choisi parmi les aluminoxanes et les agents ionisants supportés sur un support (iii) constitué de particules poreuses de polyoléfine(s) présentant un volume poreux, généré par les pores de rayon de 100 à 7500 nm d'au moins 0,2 cm³/g, sont soumises à une polymérisation préliminaire au cours de laquelle il a été mis en contact avec une alpha-oléfine, dans des conditions polymérisantes, dans un diluant dont la viscosité cinématique, mesurée à 20 °C, est de 3 à 3000 cSt (centistokes) (de 3 à 3000 mm2/s) de manière à former de 0,01 à 50 g de polyoléfine par g de catalyseur contenant les composés (i), (ii) et (iii).

5. Procédé selon la revendication 4, dans lequel le composé de métal de transition (i) est choisi parmi les composés de formules
Qₐ (C₅H_{5-a-b}R¹ _{b})(C₅H_{5-a-c}R² _{c}) Me X Y (1)
Sₐ (C₅H_{5-a-d}R³ _{d}) Z Me X Y (2)
dans lesquelles
- Q représente un groupe de liaison qui assure la réticulation des deux ligands cyclopentadiéniques,
- S représente un groupe de liaison qui assure la réticulation du ligand cyclopentadiénique et du groupe Z,
- a vaut 0 ou 1,
- b, c et d sont des nombres entiers satisfaisant aux conditions 0≤b≤5, 0≤c≤5 et 0≤d≤5 quand a vaut 0 et 0≤b≤4, 0≤c≤4 et 0≤d≤4 quand a vaut 1,
- R¹, R² et R³ sont chacun des radicaux hydrocarbonés contenant de 1 à 20 atomes de carbone pouvant être reliés au ligand cyclopentadiénique sous la forme d'un radical monovalent ou pouvant être reliés l'un à l'autre de manière à former un cycle adjacent au cycle cyclopentadiénique, des atomes d'halogène, des groupes alcoxy ayant de 1 à 12 atomes de carbone, des groupes hydrocarbonés contenant du silicium de formule -Si(R')(R'')(R'''), des groupes hydrocarbonés phosphorés de formule -P(R')(R''), des groupes hydrocarbonés azotés de formule -N(R')(R'') ou des groupes hydrocarbonés contenant du bore de formule -B(R')(R'') dans lesquelles R', R" et R''' représentent des groupes hydrocarbonés contenant de 1 à 24 atomes de carbone pour autant que quand b, c ou d vaut 2 ou plus et/ou qu'il existe une pluralité de radicaux R¹, R² ou R³, ces derniers peuvent être identiques ou différents,
- Me est un métal de transition des groupes 4 à 6 du Tableau Périodique,
- Z est un oxygène, un soufre, un groupe alcoxy ou thioalcoxy ayant de 1 à 20 atomes de carbone, un groupe hydrocarboné azoté ou phosphoré ayant de 1 à 40 atomes de carbone ou un groupe hydrocarboné contenant de 1 à 20 atomes de carbone, pour autant qu'une liaison du groupe Z soit liée au groupe S quand a vaut 1, et
- X et Y, identiques ou différents, sont chacun un hydrogène, un halogène, un groupe hydrocarboné, un groupe alcoxy, un groupe amino, un groupe hydrocarboné phosphoré ou un groupe hydrocarboné contenant du silicium ayant de 1 à 20 atomes de carbone.

6. Procédé selon la revendication 4 ou 5, dans lequel le support (iii) a été obtenu par polymérisation d'une ou plusieurs alpha-oléfines au moyen d'un solide à base de trichlorure de titane particulier préparé selon un procédé comprenant la mise en contact de tétrachlorure de titane (TiCl₄), prétraité par un composé électrodonneur, avec une composition organoaluminique correspondant à la formule générale
Al R⁶ ₚ (Y')_{q} X'_{3-(p+q)}
dans laquelle
- R⁶ représente un radical hydrocarboné de préférence choisi parmi les radicaux alkyles linéaires ou branchés contenant de 2 à 8 atomes de carbone,
- Y' représente un groupement choisi parmi -OR⁴, -SR⁴ et -NR⁴R⁵ dans lequel R⁴ et R⁵ représentent chacun un radical hydrocarboné contenant de 1 à 35 atomes de carbone ou un atome d'hydrogène;
- X' représente un halogène;
- p est un nombre quelconque tel que 0 < p ≤ 2,5; q est un nombre quelconque tel que 0,5 < q < 3, la somme (p+q) étant telle que 0,5 < (p+q) ≤ 3
de manière à obtenir un matériau liquide qui est ensuite soumis à un traitement thermique réalisé en présence d'un agent halogéné.

7. Composition catalytique susceptible d'être obtenue selon le procédé de l'une des revendications 4 à 6.

## Patentansprüche

1. Verfahren zur Homo- und/oder Copolymerisation von alpha-Olefinen, bei dem man unter polymerisierenden Bedingungen ein oder mehrere alpha-Olefine mit einer katalytischen Zusammensetzung in Kontakt bringt, die hergestellt wurde, indem man Katalysatorteilchen, die eine Verbindung eines Übergangsmetalls (i) der Gruppen 4 bis 6 des Periodensystems, die wenigstens einen Cyclopentadienliganden, der substituiert sein kann, enthält, und einen Aktivator (ii), der unter den Aluminoxanen und den Ionisierungsmitteln ausgewählt ist, gebunden auf einem Träger (iii), der aus porösen Teilchen von Polyolefin(en) besteht, die ein Porenvolumen, erzeugt von den Poren mit einem Radius von 100 bis 7500 nm, von wenigstens 0,2 cm³/g aufweisen, umfassen, einer vorbereitenden Polymerisation unterwirft, in deren Verlauf sie mit einem alpha-Olefin unter polymerisierenden Bedingungen in einem Verdünnungsmittel, dessen kinematische Viskosität, gemessen bei 20 °C, 3 bis 3000 cSt (Centistokes) (3 bis 3000 mm²/s) beträgt, in Kontakt gebracht wurden, um 0,01 bis 50 g Polyolefin pro g Katalysator, der die Verbindungen (i), (ii) und (iii) enthält, zu bilden.

2. Verfahren gemäß Anspruch 1, angewandt auf die Polymerisation von Ethylen in einem Kohlenwasserstoffverdünnungsmittel, das ausgewählt ist unter den aliphatischen Kohlenwasserstoffen mit 3 bis 10 Kohlenstoffatomen, oder in der Gasphase, umfassend einen Schritt zur Präpolymerisation in einem wie zuvor definierten Kohlenwasserstoffverdünnungsmittel bei einer Temperatur von 0 bis 60 °C, um 10 bis 1000 g Polymer pro Gramm katalytischer Feststoff, der die Verbindungen (i), (ii) und (iii) enthält, zu bilden.

3. Verfahren gemäß Anspruch 1, angewandt auf die Polymerisation von Propylen in Suspension in dem flüssigen Monomer oder in der Gasphase, umfassend einen Schritt zur Präpolymerisation in dem flüssigen Monomer bei einer Temperatur von 0 bis 60 °C, in deren Verlauf man 10 bis 1000 g Polymer pro g katalytischer Feststoff, der die Verbindungen (i), (ii) und (iii) enthält, bildet.

4. Verfahren zur Herstellung einer katalytischen Zusammensetzung für die Polymerisation von Olefinen, bei dem Katalysatorteilchen, die eine Verbindung eines Übergangsmetalls (i) der Gruppen 4 bis 6 des Periodensystems, die wenigstens einen Cyclopentadienliganden, der substituiert sein kann, enthält, und einen Aktivator (ii), der unter den Aluminoxanen und den Ionisierungsmitteln ausgewählt ist, gebunden auf einem Träger (iii), der aus porösen Teilchen von Polyolefin(en) besteht, die ein Porenvolumen, erzeugt von den Poren mit einem Radius von 100 bis 7500 nm, von wenigstens 0,2 cm³/g aufweisen, umfassen, einer vorbereitenden Polymerisation unterworfen werden, in deren Verlauf sie mit einem alpha-Olefin unter polymerisierenden Bedingungen in einem Verdünnungsmittel, dessen kinematische Viskosität, gemessen bei 20 °C, 3 bis 3000 cSt (Centistokes) (3 bis 3000 mm²/s) beträgt, in Kontakt gebracht wurden, um 0,01 bis 50 g Polyolefin pro g Katalysator, der die Verbindungen (i), (ii) und (iii) enthält, zu bilden.

5. Verfahren gemäß Anspruch 4, bei dem die Übergangsmetallverbindung (i) ausgewählt ist unter den Verbindungen der Formeln
Qₐ(C₅H_{5-a-b}R¹ _{b})(C₅H_{5-a-c}R² _{c})MeXY (1)
Sₐ(C₅H_{5-a-d}R³ _{d})ZMeXY (2)
worin
- Q eine Bindungsgruppe, die die Vernetzung der beiden Cyclopentadienliganden sicherstellt, darstellt,
- S eine Bindungsgruppe, die die Vernetzung des Cyclopentadienliganden und der Gruppe Z sicherstellt, darstellt,
- a 0 oder 1 beträgt,
- b, c und d ganze Zahlen sind, die die Bedingungen 0 ≤ b ≤ 5, 0 ≤ c ≤ 5 und 0 ≤ d ≤ 5, wenn a 0 beträgt, und 0 ≤ b ≤ 4, 0 ≤ c ≤ 4 und 0 ≤ d ≤ 4, wenn a 1 beträgt, erfüllen,
- R¹, R² und R³ jeweils Kohlenwasserstoffreste mit 1 bis 20 Kohlenstoffatomen, die an den Cyclopentadienliganden in der Form eines einwertigen Restes gebunden sein können oder aneinander gebunden sein können, so dass sie einen Ring bilden, der an den Cyclopentadienring angrenzt, Halogenatome, Alkoxygruppen mit 1 bis 12 Kohlenstoffatomen, Silicium enthaltende Kohlenwasserstoffgruppen der Formel -Si(R')(R")(R"'), phosphorhaltige Kohlenwasserstoffgruppen der Formel -P(R')(R"), stickstoffhaltige Kohlenwasserstoffgruppen der Formel
- N(R')(R") oder Bor enthaltende Kohlenwasserstoffgruppen der Formel -B(R')(R") sind, worin R', R" und R"' Kohlenwasserstoffgruppen mit 1 bis 24 Kohlenstoffatomen darstellen, insoweit, als diese Letzteren gleich oder verschieden sein können, wenn b, c oder d 2 oder mehr beträgt und/oder eine Vielzahl an Resten R¹, R² oder R³ existiert,
- Me ein Übergangsmetall der Gruppen 4 bis 6 des Periodensystems ist,
- Z ein Sauerstoff, ein Schwefel, eine Alkoxy- oder Thioalkoxygruppe mit 1 bis 20 Kohlenstoffatomen, eine stickstoffhaltige oder phosphorhaltige Kohlenwasserstoffgruppe mit 1 bis 40 Kohlenstoffatomen oder eine Kohlenwasserstoffgruppe mit 1 bis 20 Kohlenstoffatomen ist, sofern eine Bindung der Gruppe Z an die Gruppe S gebunden ist, wenn a 1 beträgt, und
- X und Y, die gleich oder verschieden sind, jeweils ein Wasserstoff, ein Halogen, eine Kohlenwasserstoffgruppe, eine Alkoxygruppe, eine Aminogruppe, eine phosphorhaltige Kohlenwasserstoffgruppe oder eine Silicium enthaltende Kohlenwasserstoffgruppe mit 1 bis 20 Kohlenstoffatomen sind.

6. Verfahren gemäß Anspruch 4 oder 5, bei dem der Träger (iii) durch Polymerisation eines oder mehrerer alpha-Olefine mittels eines Feststoffs auf der Basis von speziellem Titantrichlorid erhalten wurde, das gemäß einem Verfahren hergestellt wird, das das Inkontaktbringen von Titantetrachlorid (TiCl₄), vorbehandelt mit einer Elektronendonorverbindung, mit einer aluminiumorganischen Zusammensetzung umfasst, die der allgemeinen Formel
AlR⁶ ₚ(Y')_{q}X'_{3-(p+q)}
entspricht, worin
- R⁶ einen Kohlenwasserstoffrest darstellt, der vorzugsweise ausgewählt ist unter den linearen oder verzweigten Alkylresten mit 2 bis 8 Kohlenstoffatomen,
- Y' eine Gruppe darstellt, die ausgewählt ist unter -OR⁴, -SR⁴ und -NR⁴R⁵, worin R⁴ und R⁵ jeweils einen Kohlenwasserstoffrest mit 1 bis 35 Kohlenstoffatomen oder ein Wasserstoffatom darstellen,
- X' ein Halogen darstellt,
- p eine beliebige Zahl ist, so dass 0 < p ≤ 2,5,
- q eine beliebige Zahl ist, so dass 0,5 < q < 3, wobei die Summe (p+q) so ist, dass 0,5 < (p+q) ≤ 3,
um ein flüssiges Material zu erhalten, das dann einer thermischen Behandlung, die in Gegenwart eines halogenierten Mittels durchgeführt wird, unterzogen wird.

7. Katalytische Zusammensetzung, die gemäß dem Verfahren eines der Ansprüche 4 bis 6 erhalten werden kann.

## Claims

1. Process for the homo- and/or copolymerisation of alpha-olefins in which one or more alpha-olefins are placed in contact, in polymerising conditions, with a catalytic composition which has been prepared by subjecting catalyst particles comprising a compound of a transition metal (i) of Groups 4 to 6 of the Periodic Table containing at least one cyclopentadiene ligand capable of being substituted and an activator (ii), chosen from aluminoxanes and ionising agents supported on a support (iii) composed of porous particles of polyolefin(s) exhibiting a pore volume, generated by the pores with a radius of 100 to 7500 nm, of at least 0.2 cm³/g, to a preliminary polymerisation in the course of which they have been placed in contact with an alpha-olefin, in polymerising conditions, in a diluent whose kinematic viscosity, measured at 20 °C, is from 3 to 3000 cSt (centistokes) (from 3 to 3000 mm²/s), so as to form from 0.01 to 50 g of polyolefin per g of catalyst containing compounds (i), (ii) and (iii).

2. Process according to claim 1, applied to the polymerisation of ethylene in a hydrocarbon diluent chosen from aliphatic hydrocarbons containing from 3 to 10 carbon atoms or in gaseous phase, comprising a prepolymerisation stage in a hydrocarbon diluent as defined above at a temperature of 0 to 60 °C, so as to form from 10 to 1000 g of polymer per gram of catalytic solid containing compounds (i), (ii) and (iii).

3. Process according to claim I, applied to the polymerisation of propylene in suspension in the liquid monomer or in gaseous phase, comprising a prepolymerisation stage in the liquid monomer at a temperature of 0 to 60 °C in the course of which from 10 to 1000 g of polymer per gram of catalytic solid containing compounds (i), (ii) and (iii) are formed.

4. Process for the preparation of a catalytic composition for the polymerisation of olefins in which catalyst particles comprising a compound of a transition metal (i) of Groups 4 to 6 of the Periodic Table containing at least one cyclopentadiene ligand capable of being substituted and an activator (ii), chosen from aluminoxanes and ionising agents supported on a support (iii) composed of porous particles of polyolefin(s) exhibiting a pore volume, generated by the pores with a radius of 100 to 7500 nm, of at least 0.2 cm³/g, are subjected to a preliminary polymerisation in the course of which it has been placed in contact with an alpha-olefin, in polymerising conditions, in a diluent whose kinematic viscosity, measured at 20 °C, is from 3 to 3000 cSt (centistokes) (from 3 to 3000 mm²/s), so as to form from 0.01 to 50 g of polyolefin per g of catalyst containing compounds (i), (ii) and (iii).

5. Process according to claim 4, in which the transition metal compound (i) is chosen from compounds with the formulas
Qₐ (C₅H_{5-a-b}R¹ _{b})(C₅H_{5-a-c}R² _{c}) Me X Y (1)
Sₐ (C₅H_{5-a-d}R³d) Z Me X Y (2)
in which:
- Q represents a linking group which undertakes the cross-linking of the two cyclopentadiene ligands,
- S represents a linking group which undertakes the cross-linking of the cyclopentadiene ligand and the Z group,
- a equals 0 or 1,
- b, c and d are whole numbers meeting the conditions 0≤b≤5, 0≤c≤5 and 0≤d≤5 when a equals 0 and 0≤b≤4, 0≤c≤4 and 0≤d≤4 when a equals 1,
- R¹, R² and R³ are each hydrocarbon radicals containing from 1 to 20 carbon atoms capable of being linked to the cyclopentadiene ligand in the form of a monovalent radical or capable of being linked to one another so as to form a ring adjacent to the cyclopentadiene ring, halogen atoms, alkoxy groups having from 1 to 12 carbon atoms, hydrocarbon groups containing silicon with the formula -Si(R')(R")(R"'), phosphorated hydrocarbon groups with the formula -P(R')(R"), nitrogenous hydrocarbon groups with the formula -N(R')(R") or hydrocarbon group containing boron with the formula -B(R')(R") in which R', R" and R"' represent hydrocarbon groups containing from 1 to 24 carbon atoms provided that when b, c or d equals 2 or more and/or when a plurality of R¹, R² or R³ radicals exists, the latter can be identical or different,
- Me is a transition metal of Groups 4 to 6 of the Periodic Table,
- Z is an oxygen, a sulfur, an alkoxy or thioalkoxy group having from 1 to 20 carbon atoms, a nitrogenous or phosphorated hydrocarbon group having from 1 to 40 carbon atoms or a hydrocarbon group containing form 1 to 20 carbon atoms, provided that a bond of the Z group is bonded to the S group when a equals 1, and
- X and Y, identical or different, are each a hydrogen, a halogen, a hydrocarbon group, an alkoxy group, an amino group, a phosphorated hydrocarbon group or a hydrocarbon group containing silicon having from 1 to 20 carbon atoms.

6. Process according to claim 4 or 5, in which the support (iii) has been obtained by polymerisation of one or more alpha-olefins by means of a special titanium trichloride-based solid prepared according to a process comprising the placing of titanium tetrachloride (TiCl₄) pre-treated with an electron-donor compound in contact with an organoaluminium composition corresponding to the general formula:
Al R⁶ ₚ(Y')_{q} X_{3-(p+q)}
in which
- R⁶ represents a hydrocarbon radical chosen preferably from linear or branched alkyl radicals containing from 2 to 8 carbon atoms,
- Y' represents a group chosen from -OR⁴, -SR⁴ and -NR⁴R⁵ in which R⁴ and R⁵ each represent a hydrocarbon radical containing from 1 to 35 carbon atoms or a hydrogen atom;
- X' represents a halogen;
- p is any number such that 0 < p ≤ 2.5;
- q is any number such that 0.5 < q < 3, the sum (p+q) being such that 0.5 < (p+q) ≤ 3 so as to obtain a liquid material which is then subjected to a thermal treatment carried out in the presence of a halogenated agent.

7. Catalytic composition capable of being obtained according to the process of any one of claims 4 to 6.
